# EUROPEAN PATENT APPLICATION

(11) **EP 4 797 483 A1**
(43) Date of publication of application: **26.08.2026**
(21) Application number: 25159139.2
(22) Date of filing: 20.02.2025
(51) Int. Cl.: H02J 3/38, H02M 1/00, H02M 7/493

(54) **DEVICE, SYSTEM AND METHOD FOR PROVIDING UNIFYING CONTROL OF A PLURALITY OF CONVERTERS**

(71) Applicant: Hitachi Energy Ltd, 8050 Zürich (CH)
(72) Inventor: TAYYEBI, Ali, 72359 Västerås (SE); TUCKEY, Andrew Mark, Livingstone, NT, 0837 (AU)
(74) Representative: Vossius & Partner Patentanwälte Rechtsanwälte mbB

(57) **Abstract**

The present disclosure relates to a device for providing unifying control of a plurality of converters. The device comprises a central controller configured to obtain current and voltage measurements at at least one reference point, a plurality of local controllers each associated with one of a plurality of converters and each configured to obtain a current and voltage measurement of the respective converter and a plurality of unifying controllers each associated with one of the plurality of converters and configured to provide unifying control of the converters based on control signals of the central controller and/or the respective local controller. The disclosure further relates to a corresponding system, method, storage medium and computer program product.

## Description

The present disclosure relates to a device, system and method for providing unifying control of a plurality of converters. In particular, the disclosure may be applicable to converters connected in parallel.

In current power grid systems, modularity of converter-based systems is a key advantage over conventional generation systems. As a result, converter modules with lower ratings can be connected in parallel to create systems with higher rating to meet the required system design specifications, as well as enhancing the overall system reliability and availability. However, parallel connection of converter modules poses critical challenges for controlling the individual modules as well as the entire system.

These problems are solved with the features of the present disclosure. In particular, the present disclosure provides for unifying and/or blending the complex control architectures of a converter-based system comprising converters connected in parallel.

Control systems for converter modules are typically composed of centralised and/or distributed controllers. According to the present disclosure, unifying controllers (e.g., using interfacing control functions (ICFs)) are utilised to unify the centralised and distributed controllers for parallel-connected converters. This may stabilise the overall system performance and facilitate a more adaptive and flexible control for the overall system, as well as the individual modules.

The invention is specified by the independent claims. Preferred embodiments are defined in the dependent claims. In the following description, although numerous features may be designated as optional, it is nevertheless acknowledged that all features comprised in the independent claims are not to be read as optional.

The present disclosure relates to a device for providing unifying control of a plurality of converters. The device comprises a central controller configured to obtain current and voltage measurements at at least one reference point, a plurality of local controllers each associated with one of a plurality of converters and each configured to obtain a current and voltage measurement of the respective converter and a plurality of unifying controllers each associated with one of the plurality of converters and configured to provide unifying control of the converters based on control signals of the central controller and/or the respective local controller.

Various embodiments may preferably implement the following features.

Preferably, the unifying controllers are configured to perform unifying control based on at least one interfacing control function.

Preferably, the unifying controllers are configured to perform at least one of dynamically or in a static manner configuring switching of the converters between different control modes, between grid following (GFL) and grid forming (GFM) behaviour, determining a weighted average of converter inputs, filtering converter inputs, switching between averaged, filtered, and unprocessed inputs, or configuring the converters based on at least one external control signal.

Preferably, the central and/or local controllers are configured to perform at least one of active power control, reactive power control, frequency and angle synchronisation, or AC voltage control of at least one converter, a control of at least one converter that is related to a system level converter performance, current reference tracking control, voltage reference tracking control, current-limiting controls, virtual impedance control, or virtual admittance control of at least one converter, or a control of at least one converter that is related to a device level converter performance.

Preferably, the local controllers are interconnected and configured to bidirectionally exchange information with each other. Preferably, the local controllers are each connected to the central controller and configured to bidirectionally exchange information with each other.

Preferably, the central controller is configured to obtain and/or output a control signal based on the current and voltage measurements. Preferably, the local controllers are configured to obtain and/or output a control signal based on the current and voltage measurement.

Preferably, the central controller and at least one of the local controllers and/or at least one of the unifying controllers are provided on the same hardware or on separate hardware.

The present disclosure further relates to a system for providing unifying control of a plurality of converters. The system comprises a plurality of converters connected in parallel, a central controller configured to obtain current and voltage measurements at at least one reference point, a plurality of local controllers each associated with one of the plurality of converters and each configured to obtain a current and voltage measurement of the respective converter and a plurality of unifying controllers each associated with one of the plurality of converters and configured to provide unifying control of the converters based on control signals of the central controller and/or the respective local controller.

Various embodiments may preferably implement the following features.

Preferably, the local controllers are each provided at or at the site of the respective converter.

Preferably, the central controller and at least one of the local controllers and/or at least one of the unifying controllers are provided on the same hardware or on separate hardware.

Preferably, at least two of the central controller, the plurality of local controllers, and the plurality of unifying controllers are provided in a device.

Preferably, the reference point is a point of common coupling (PCC).

Preferably, the converters are DC-AC converters connected to a DC energy source, a photovoltaic (PV) plant, a hydrogen electrolyser, a hydrogen fuel cell, a DC-DC converter, a DC grid, or a DC load, preferably via a DC link, or HVDC link.

Preferably, the central controller and/or the local controllers and/or the unifying controllers are configured to receive and/or transmit signals from and to one another, non-associated converters.

Preferably, the central controller and/or the local controllers and/or the unifying controllers are configured to receive and/or transmit signals from and to a renewable energy source (RES) controller, a network controller, a microgrid controller, a transmission system operator (TSO), or distribution system operator (DSO).

Preferably, the signals are received and/or transmitted through a communication network and/or link.

Preferably, the system further comprises an optimiser controller configured to receive and/or transmit signals from and to at least one of the central controller and/or the local controllers and/or the unifying controllers to optimise performance, robustness, and/or efficiency of the system by modifying parameters of the central, local, and unifying controllers.

Preferably, in case an online or real time optimiser is implemented, the unifying controllers may update control gains or references of the underlying control architectures (e.g., the central, local, and unifying controllers) with a certain frequency or time-resolution. The optimisation objectives may be operating cost minimisation, efficiency maximisation, profit maximisation if production is involved or if ancillary service provision is involved.

The present disclosure further relates to a corresponding method for providing unifying control of a plurality of converters connected in parallel. The method comprises obtaining current and voltage measurements at at least one reference point, providing the current measurements to a central controller, providing respective current measurements to a plurality of local controllers each associated with one of the plurality of converters and providing unifying control of each of the converters based on control signals from the central controller and the plurality of local controllers.

The present disclosure further relates to a corresponding non transitory computer-readable storage medium comprising instructions which, when executed by at least one processor, configure the at least one processor to obtain current and voltage measurements at at least one reference point, provide the current measurements to a central controller, provide respective current measurements to a plurality of local controllers each associated with one of a plurality of converters and provide unifying control of each of the converters based on control signals from the central controller and the plurality of local controllers.

The present disclosure further relates to a corresponding computer program product comprising instructions which, when executed by at least one processor, configure the at least one processor to obtain current and voltage measurements at at least one reference point, provide the current measurements to a central controller, provide respective current measurements to a plurality of local controllers each associated with one of a plurality of converters and provide unifying control of each of the converters based on control signals from the central controller and the plurality of local controllers.

Other aspects, features, and advantages will be apparent from the summary above, as well as from the description that follows, including the figures and the claims.

Embodiments of the present disclosure will now be described by way of example only and with reference to the following accompanying drawings. In the figures, the same reference numerals denote the same or similar elements.

As usual in the art, DC refers to direct current and AC to alternating current.
Fig. 1 is a schematic drawing of a device according to an embodiment of the present disclosure.
Fig. 2 is a flow chart of a method according to an embodiment of the present disclosure.
Fig. 3 is a schematic system overview according to an embodiment of the present disclosure.

The present disclosure relates to a systematic approach to unify centralised and distributed control architectures for converters connected in parallel. The proposed approach utilises unifying controllers (interfacing control functions, ICFs) to improve system performance, control performance, adaptiveness, and stability. This may also enable several control degrees of freedom such as smooth transition, mode-switching, coordinated operation based on estimated quantities or external signals, among others.

As used herein, a parallel connection of certain components may refer to a direct parallel connection or a parallel connection with one or more further elements interposed (indirect parallel connection). For example, a breaker or the like may be provided between two converters while still considering the converters to be connected in parallel.

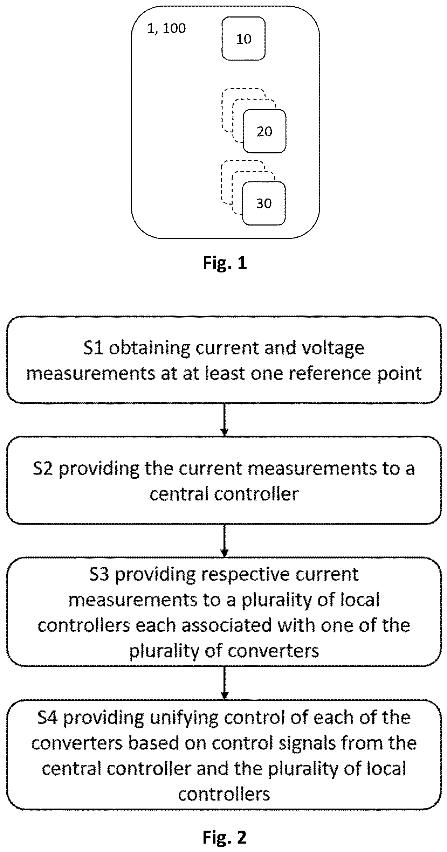

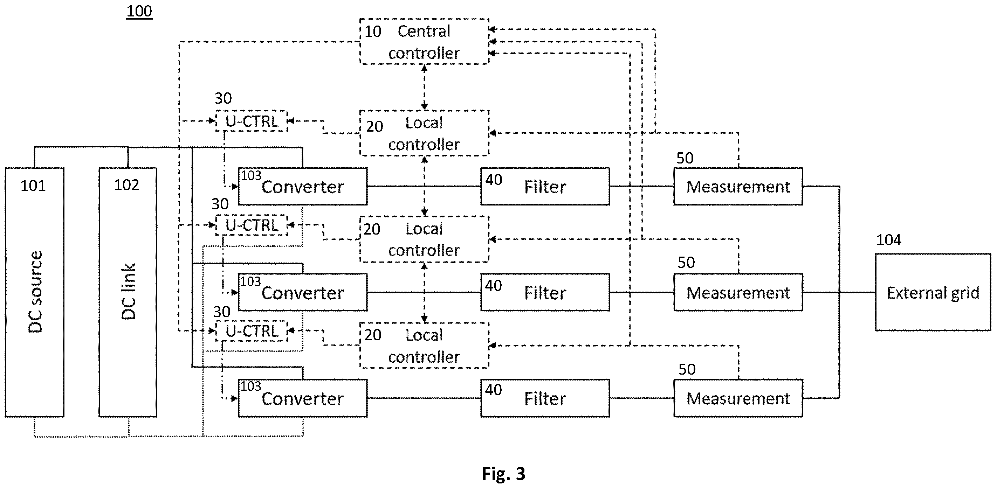

Fig. 1 shows a device 1 according to an embodiment of the present disclosure. The device 1 comprises a central controller 10 configured to obtain current and voltage measurements at at least one reference point 50 (see Fig. 3), a plurality of local controllers 20 each associated with one of a plurality of (power) converters 103 (see Fig. 3) and each configured to obtain a current and voltage measurement of the respective converter 103, and a plurality of unifying controllers 30 each associated with one of the plurality of converters 103 and configured to provide unifying control of the converters 103 based on control signals of the central controller 10 and/or the respective local controller 20.

The plurality of converters 103 may be directly or indirectly connected in parallel. This equally applies to all electrical connections disclosed in the present specification.

The unifying controllers 30 may in other words provide unified control.

The controllers 10, 20, 30 forming part of a device 1 does not necessarily indicate any spatial relation between the controllers 10, 20, 30. As will be apparent by the description of various embodiments of the present disclosure, the controllers 10, 20, 30 may be located in proximity to one another, e.g., on the same hardware or within a single device, or may be spread apart on separate hardware or devices depending on the overall configuration. The controllers 10, 20, 30 may also form part of a system 100 as will be further described below.

In an embodiment, the unifying controllers 30 are configured to perform unifying control based on at least one interfacing control function.

In an embodiment, the unifying controllers 30 are configured to perform at least one of dynamically or in a static manner configuring switching of the converters 103 between different control modes, between different grid behaviour (e.g., providing voltage and/or frequency support to the grid (e.g., during disturbances or outages), synchronising a converter output with the grid), providing at least one of inertia, system strength, voltage regulation, or frequency response, or providing power control. The unifying controllers 30 may also be configured to perform at least one of dynamically or in a static manner configuring switching of the converters 103 between grid following (GFL) and grid forming (GFM) behaviour, determining a weighted average of converter inputs, filtering converter inputs, switching between averaged, filtered, and unprocessed inputs, or configuring the converters 103 based on at least one external control signal.

In an embodiment, the central and/or local controllers 10, 20 may be configured to perform at least one of active power control, reactive power control, frequency and angle synchronisation, or AC voltage control of at least one converter 103 (of the plurality of (power) converters 103), or a control of at least one converter 103 that is related to a system level converter performance.

Further, the central and/or local controllers 10, 20 may be configured to perform at least one of current reference tracking control, voltage reference tracking control, current-limiting controls, virtual impedance control, or virtual admittance control of at least one converter 103 (of the plurality of converters 103), or a control of at least one converter 103 that is related to a device level converter performance.

In an embodiment, the local controllers 20 are interconnected and configured to bidirectionally exchange information with each other. In an embodiment, the local controllers 20 are each connected to the central controller 10 and configured to bidirectionally exchange information with each other.

In an embodiment, the central controller 10 is configured to obtain and/or output a control signal based on the current and voltage measurements. Preferably, the local controllers 20 are configured to obtain and/or output a control signal based on the current and voltage measurement.

In an embodiment, the central controller 10 and at least one of the local controllers 20 and/or at least one of the unifying controllers 30 are provided on the same hardware or on separate hardware.

Fig. 2 shows a flowchart of a corresponding method for providing unifying control of a plurality of (power) converters 103 connected in parallel according to an embodiment.

The method comprises obtaining S1 current and voltage measurements at at least one reference point 50, providing S2 the current measurements to a central controller 10, providing S3 respective current measurements to a plurality of local controllers 20 each associated with one of the plurality of converters 103 and providing S4 unifying control of each of the converters 103 based on control signals from the central controller 10 and the plurality of local controllers 20. The general functionality of the method corresponds to the one of the device 1 and system 100 disclosed herein.

The present disclosure further relates to a corresponding non transitory computer-readable storage medium and computer program product respectively comprising instructions which, when executed by at least one processor, configure the at least one processor to obtain current and voltage measurements at at least one reference point 50, provide the current measurements to a central controller 10, provide respective current measurements to a plurality of local controllers 20 each associated with one of a plurality of converters 103 and provide unifying control of each of the converters 103 based on control signals from the central controller 10 and the plurality of local controllers 20.

Referring to Fig. 3, the present disclosure further relates to a system 100 for providing unifying control of a plurality of converters 103 connected in parallel according to an embodiment.

The system 100 comprises a plurality of converters 103 connected in parallel, a central controller 10 configured to obtain current and voltage measurements at at least one reference point 50 (in Fig. 3 denotes as "Measurement"), a plurality of local controllers 20 each associated with one of a plurality of converters 103 and each configured to obtain a current and voltage measurement of the respective converter 103, and a plurality of unifying controllers 30 (indicated as U-CTRL in Fig. 3, may also be referred to as ICF) each associated with one of the plurality of converters 103 and configured to provide unifying control of the converters 103 based on control signals of the central controller 10 and/or the respective local controller 20.

Although fig. 3 shows three converters 103 connected in parallel, the present disclosure is not limited to that specific configuration and may be used for any plurality of converters, in particular converters connected in parallel.

The system 100 may also comprise one or more filters 40. For example, one filter 40 per converter 103 may be provided.

In an embodiment, the local controllers 20 and/or the unifying controllers 30 are each provided at or at the site of the respective converter 103. In some examples it may be beneficial to provide the local controllers 20 and/or the unifying controllers 30 in close proximity to the respective converter 103 (i.e., at the converter 103 or at the site of the respective converter 103) to minimise latency and thus be able to more quickly respond to events in the power grid and improve stability. However, it may also be advantageous to provide at least some of the controllers 10, 20, 30 in close proximity to each other.

The central controller 10 and at least one of the local controllers 20 and/or at least one of the unifying controllers 30 may be provided on the same hardware or on separate hardware.

Hence, depending on the overall system configuration, the controllers 10, 20, 30 may fully or partially be provided in the same device or distributed over the system 100.

In an embodiment, at least two of the central controller 10, the plurality of local controllers 20, and the plurality of unifying controllers 30 are provided in a (single) device 1 (for example within a single housing).

The converters 103 may be connected to an external (power) grid 104.

The reference point 50 may be a point of common coupling (PCC). Although Fig. 3 shows one reference point 50 per converter 103, the present disclosure also encompasses fewer reference points 50, e.g., one central reference point, or more reference points 50. For example, a single reference point 50 may be provided at the point where all converters 103 are connected to the external grid 104.

In an embodiment, the converters 103 are DC-AC converters connected to a DC source 101 such as a DC energy source, a photovoltaic (PV) plant, a hydrogen electrolyser, a hydrogen fuel cell, a DC-DC converter, a DC grid, or a DC load. The converters 103 and the DC source 101 may be connected via a DC link 102, or high-voltage DC (HVDC) link 102.

The DC source may also utilise an additional controller (i.e., an own DC source controller) to provide a stable DC voltage at its terminal and/or provide a desired DC current in both directions.

In an embodiment, the central controller 10 and/or the local controllers 20 and/or the unifying controllers 30 are configured to receive and/or transmit signals from and to one another, non-associated converters 103.

The control and current paths are indicated by the solid, dashed and dotted lines in Fig. 3. The central controller 10 as well as each of the local controllers 20 may receive or obtain measurement data from the one or more reference point(s) 50. The local controllers 20 may be configured to communicate with each other bidirectionally. That is, each of the local controllers 20 may transmit data and/or signals to and receive data and/or signals from other local controllers 20. The same applies to each of the unifying controllers 30. Further each of the local controllers 20 and the unifying controllers 30 may be configured to bidirectionally exchange data and/or control signals.

Although in Fig. 3 the local controllers 20 are only indirectly connected to the respective converters 103 (i.e., through the respective unifying controllers 30), they may also directly exchange information with the respective converters 103.

In an embodiment, the central controller 10 and/or the local controllers 20 and/or the unifying controllers 30 are configured to receive and/or transmit signals from and to a renewable energy source (RES) controller, a network controller, a microgrid controller, a transmission system operator (TSO), or distribution system operator (DSO).

The unifying controllers may be configured to receive and/or transmit the signals through a communication network and/or link.

In an embodiment, the system 100 further comprises an optimiser controller configured to receive and/or transmit signals from and to at least one of the central controller 10 and/or the local controllers 20 and/or the unifying controllers 30 to optimise performance, robustness, and/or efficiency of the system by modifying parameters of the central, local, and unifying controllers 30.

The optimiser controller may be realised as an optimisation algorithm implemented in a controller (e.g., a processing unit).

In an embodiment, in case an online or real time optimiser is implemented, the unifying controllers 30 may update control gains or references of the underlying control architectures (e.g., the central, local, and unifying controllers 30) with a certain frequency or time resolution. The optimisation objectives may be operating cost minimisation, efficiency maximisation, profit maximisation if production is involved or if ancillary service provision is involved.

In summary, according to the present disclosure, by using unifying controllers, an enhanced overall system performance can be ensured. This can be achieved with the placement of the unifying controllers (or ICFs) such that they receive inputs from the aforementioned controllers and possibly external units (e.g., network control, system operators, and other converters) and by defining unified control inputs for the individual converter modules.

Under an appropriate design of the unifying controllers, seamless transition between centralised and distributed control configurations can be realised. Further, undesired instability scenarios may be eliminated, thus improving the system availability.

Also, a coordinated transition between different control architectures is possible, which enhances robustness and grid code compliance. Externally coordinated transition is possible, thus accommodating to the new markets and requirements.

According to the present disclosure, the benefits of centralised and distributed synchronisation procedures can be combined, leading to improved performance, robustness, and availability.

Transition based on grid conditions can be enabled, also leading to enhanced performance, robustness, and availability.

Control degrees of freedom for the islanded and grid-connected modes and transitions can be provided for extended compliance and applicability for different markets.

Potential degrees of freedom for partitioning the converters, i.e., some modules under centralised controls and some under the distributed controls can be achieved. This ensures enhanced performance, robustness, and dynamic flexibility.

The proposed solution can be extended to a parallel connected setup in which each converter is connected to a separate DC link. This leads to a cost reduction by eliminating a control redesign.

Further, the proposed solution can be extended to a case in which the converters are subgroups of converters and are geographically distributed. Thereby, the total system integration cost can be reduced by utilising not necessarily identical converters. This may further enable ensemble control features that cannot be realised by individual devices.

Also, the proposed solution can be used to centrally synchronise different converters and smoothly transition the converters to the locally controlled mode. This leads to enhanced stability and improved grid connection performance.

The proposed solution enables partitioning such converter architectures, in which some converters are in GFL mode and some in GFM mode. The proposed solution allows the adaptive and smooth modification of the respective GFM and GFL shares.

This achieves enhanced compliance, performance, and robustness and cost reduction by integrating non-uniform converters.

It should be noted that the unifying controllers enable the features, without the necessity of modifying the local or central controllers. Thus, the system provides a cost and engineering effort reduction by only (re-)designing unifying controllers.

It should be noted that the unifying controllers are not a mere switch or sliding control and may on their own include several control functions.

The unifying controller blocks can enable an interoperable GFM-GFL mode. For instance, the central controller can overwrite certain setting or control signals of the local controls such that the overall system behaves as GFM while the local controllers are in GFL mode and vice versa.

This ensures enhanced compliance, dynamic performance, and robustness as well as reliability, availability, safety, and enhanced lifetime.

Unless explicitly indicated otherwise, all embodiments disclosed herein are compatible with each other.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analogue implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according to embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organisation.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

### List of reference signs

- 1: Device
- 10: Central controller
- 20: Local controller
- 30: Unifying controller (U-CTRL)
- 40: Filter
- 50: Reference point
- 100: System
- 101: DC source
- 102: DC Link
- 103: Converter
- 104: Grid

## Claims

1. Device for providing unifying control of a plurality of converters, the device comprising:
a central controller configured to obtain current and voltage measurements at at least one reference point;
a plurality of local controllers each associated with one of a plurality of converters and each configured to obtain a current and voltage measurement of the respective converter; and
a plurality of unifying controllers each associated with one of the plurality of converters and configured to provide unifying control of the converters based on control signals of the central controller and/or the respective local controller.

2. Device according to claim 1, wherein the unifying controllers are configured to perform unifying control based on at least one interfacing control function.

3. Device according to claim 1 or 2, wherein the unifying controllers are configured to perform at least one of dynamically or in a static manner configuring switching of the converters between different control modes, between grid following, GFL, and grid forming, GFM, behaviour, determining a weighted average of converter inputs, filtering converter inputs, switching between averaged, filtered, and unprocessed inputs, or configuring the converters based on at least one external control signal;
wherein preferably, the central and/or local controllers are configured to perform at least one of active power control, reactive power control, frequency and angle synchronisation, or AC voltage control of at least one converter, a control of at least one converter that is related to a system level converter performance, current reference tracking control, voltage reference tracking control, current-limiting controls, virtual impedance control, or virtual admittance control of at least one converter, or a control of at least one converter that is related to a device level converter performance.

4. Device according to any one of claims 1 to 3, wherein the local controllers are interconnected and configured to bidirectionally exchange information with each other.

5. Device according to any one of claims 1 to 4, wherein the local controllers are each connected to the central controller and configured to bidirectionally exchange information with each other.

6. Device according to any one of claims 1 to 5, wherein the central controller is configured to obtain and/or output a control signal based on the current and voltage measurements; and
wherein the local controllers are configured to obtain and/or output a control signal based on the current and voltage measurement.

7. Device according to any one of claims 1 to 6, wherein the central controller and at least one of the local controllers and/or at least one of the unifying controllers are provided on the same hardware or on separate hardware.

8. System for providing unifying control of a plurality of converters, the system comprising:
a plurality of converters connected in parallel;
a central controller configured to obtain current and voltage measurements at at least one reference point;
a plurality of local controllers each associated with one of a plurality of converters and each configured to obtain a current and voltage measurement of the respective converter; and
a plurality of unifying controllers each associated with one of the plurality of converters and configured to provide unifying control of the converters based on control signals of the central controller and/or the respective local controller.

9. System according to claim 8, wherein the local controllers are each provided at or at the site of the respective converter.

10. System according to any one of claims 8 or 9, wherein the reference point is a point of common coupling, PCC.

11. System according to any one of claims 8 to 10, wherein the converters are DC-AC converters connected to a DC energy source, a photovoltaic, PV, plant, a hydrogen electrolyser, a hydrogen fuel cell, a DC-DC converter, a DC grid, or a DC load, preferably via a DC link, or HVDC link.

12. System according to any one of claims 8 to 11, wherein the central controller and/or the local controllers and/or the unifying controllers are configured to receive and/or transmit signals from and to one another, non-associated converters; and/or
wherein the central controller and/or the local controllers and/or the unifying controllers are configured to receive and/or transmit signals from and to a renewable energy source, RES, controller, a network controller, a microgrid controller, a transmission system operator, TSO, or distribution system operator, DSO; and/or
wherein the system further comprises an optimiser controller configured to receive and/or transmit signals from and to at least one of the central controller and/or the local controllers and/or the unifying controllers to optimise performance, robustness, and/or efficiency of the system by modifying parameters of the central, local, and unifying controllers.

13. Method for providing unifying control of a plurality of converters connected in parallel, the method comprising:
obtaining current and voltage measurements at at least one reference point;
providing the current measurements to a central controller;
providing respective current measurements to a plurality of local controllers each associated with one of the plurality of converters; and
providing unifying control of each of the converters based on control signals from the central controller and the plurality of local controllers.

14. Non transitory computer-readable storage medium comprising instructions which, when executed by at least one processor, configure the at least one processor to:
obtain current and voltage measurements at at least one reference point;
provide the current measurements to a central controller;
provide respective current measurements to a plurality of local controllers each associated with one of a plurality of converters connected in parallel; and
provide unifying control of each of the converters based on control signals from the central controller and the plurality of local controllers.

15. Computer program product comprising instructions which, when executed by at least one processor, configure the at least one processor to:
obtain current and voltage measurements at at least one reference point;
provide the current measurements to a central controller;
provide respective current measurements to a plurality of local controllers each associated with one of a plurality of converters connected in parallel; and
provide unifying control of each of the converters based on control signals from the central controller and the plurality of local controllers.
